# EUROPÄISCHE PATENTSCHRIFT

(11) **EP 2 126 427 B1**
(45) Veröffentlichungstag und Bekanntmachung des Hinweises auf die Patenterteilung: **07.12.2011**
(21) Anmeldenummer: 08701203.5
(22) Anmeldetag: 02.01.2008
(51) Int. Cl.: F16K 15/04

(54) **RÜCKSCHLAGVENTIL UND INJEKTOR MIT HYDRAULISCHEM ÜBERSETZER UND RÜCKSCHLAGVENTIL**
NON-RETURN VALVE AND INJECTOR WITH HYDRAULIC BOOSTER AND NON-RETURN VALVE
CLAPET ANTI-RETOUR ET INJECTEUR MUNI D'UN CONVERTISSEUR HYDRAULIQUE ET D'UN CLAPET ANTI-RETOUR

(30) Priorität: 17.01.2007 DE 102007002445
(43) Veröffentlichungstag der Anmeldung: 02.12.2009
(73) Patentinhaber: Robert Bosch GmbH, 70442 Stuttgart (DE)
(72) Erfinder: RODRIGUEZ-AMAYA, Nestor, 70372 Stuttgart (DE); LEIMSER, Markus, 73635 Rudersberg-Steinenberg (DE); STENGELE, Michael, 72477 Schwenningen (DE); THEURER, Andreas, 71640 Ludwigsburg (DE); BUTSCHER, Christoph, 71229 Leonberg (DE); GIEHL, Alexander, 67663 Kaiserslautern (DE)
(86) Internationale Anmeldenummer: PCT/EP2008/050016
(87) Internationale Veröffentlichungsnummer: WO 2008/087051

(56) Entgegenhaltungen:
- EP-A- 0 268 520
- WO-A-2007/057255
- DE-A1- 4 203 161
- DE-A1- 19 501 725
- DE-A1-102006 010 706
- GB-A- 2 287 085
- US-A- 4 945 945
- US-A- 6 029 685

## Beschreibung

### Stand der Technik

Die Erfindung betrifft ein Rückschlagventil nach der Gattung des Anspruchs 1 und einen Injektor nach der Gattung des Anspruchs 8.

Derartige Rückschlagventile sind aus dem Stand der Technik hinlänglich bekannt. Diese Rückschlagventile weisen üblicherweise ein Ventilgehäuse auf, in das eine Bohrung eingebracht ist, wobei in der Bohrung ein Ventilsitz ausgebildet ist. Weiter weisen diese Rückschlagventile ein kugelförmiges Ventilglied auf, das in der Bohrung angeordnet ist und es ist ein Hubanschlagelement für das Ventilglied vorgesehen, an dem dieses bei geöffnetem Rückschlagventil zur Anlage kommt.

Diese Rückschlagventile sind für viele Anwendungen geeignet, jedoch gibt es insbesondere beim Einsatz in Injektoren mit hydraulischem Druckübersetzer, wie sie bei modernen Kraflstofleinspritzsystemen für Brennkraftmaschinen eingesetzt werden, Anwendungsfälle, in denen sich die herkömmlichen Rückschlagventile als nicht haltbar genug erwiesen haben. Bei herkömmlichen Rückschlagventilen führt das seitliche Ausweichen des Ventilglieds in der geöffneten Stellung des Rückschlagventils dazu, dass erst beim Auftreffen des Ventilglieds auf dem Ventilsitz das Ventilglied durch den Ventilsitz wieder zentriertwird. Dies führt zu einer Relativbewegung zwischen Ventilglied und Ventilsitz. Diese Relativbewegung verursacht Verschleiß und verkürzt die Lebensdauer von Ventilsitz und Ventilglied erheblich.

Aus der nachveröffentlichten WO 2007/057255 A1 ist ein Rückschlagventil bekannt, das ein Hubanschlagelement mit einer trichterförmigen Vertiefung aufweist, in die ein Ventilelement in geöffnetem Zustand eintaucht Ähnliche Rückschlagventile sind auch aus der DE 195 01 725 A1 und GB 2 287 085 A bekannt.

### Offenbarung der Erfindung

### Vorteile der Erfindung

Das erfindungsgemäße Rückschlagventil mit den Merkmalen gemäß Anspruch 1 hat den Vorteil, dass das Ventilglied in geöffnetem Zustand in der Vertiefung des Hubanschlagelements zentriert wird und dadurch das Ventilglied des erfindungsgemäßen Rückschlagventils genau mittig auf dem Venfilsitz auftrifft, wenn das Rückschlagventil wieder schließt, so dass ein nennenswerter Verschleiß zwischen Ventilsitz und Ventilglied nicht feststellbar ist. Außerdem kann bei diesem Ausführungsbeispiel auf eine Ventilfeder verzichtet werden, was die Herstellungskosten und den Bauraumbedarf des erfindungsgemäßen Rückschlagventils erheblich reduziert. Durch die verringerten Massen spricht dieses Rückschlagventil besonders schnell an. Durch die zumindest mittelbare axiale Fixierung des Hubanschlagelements mittels einer Schweißverbindung sind hierfür keine zusätzlichen Bauteil erforderlich, wodurch die Herstellungskosten und der Bauraumbedarf des erfindungsgemäßen Rückschlagventils ebenfalls verringert sind.

Um das den Kraftstoff bei geöffnetem Venfilglied an dem Ventilglied und dem Hubanschlagelement vorbei beziehungsweise hindurchzuführen, ist in dem Hubanschlagelement wenigstens eine Querbohrung vorgesehen, die einen Ringspalt zwischen dem Hubanschlagelement und der Bohrung mit einer Längsbohrung im Hubanschlagelement verbindet. Die Längsbohrung ist dabei zur Vertiefung hin als Drosselbohrung ausgebildet und der Übergang von der Vertiefung zur Drosselbohrung ist scharfkantig ausgeführt, um beim Öffnen des Rückschlagventils die Bewegung des Ventilglieds vor dem Auftreffen auf das Hubanschlagelement zu dämpfen. Der Übergang der Drosselbohrung zu dem der Vertiefung abgewandten Bereich der Längsbohrung ist demgegenüber strömungsgünstig ausgebildet, um ein schnelles Abheben des Ventilglieds vom Hubanschlagelement beim Schließen des Rückschlagventils zu ermöglichen.

Das erfindungsgemäße Rückschlagventil ist besonders vorteilhaft bei einem Injektor mit einem hydraulischen Druckübersetzer für eine Brennkraftmaschine einsetzbar.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen
- Figur 1: einen Längsschnitt durch ein Ausführungsbeispiel eines erfindungsgemäßen Rückschlagventils und
- Figur 2: einen erfindungsgemäßen Injektor mit hydraulischem Druckübersetzer und erfindungsgemäßen Rückschlagventil.

### Beschreibung des Ausführungsbeispiels

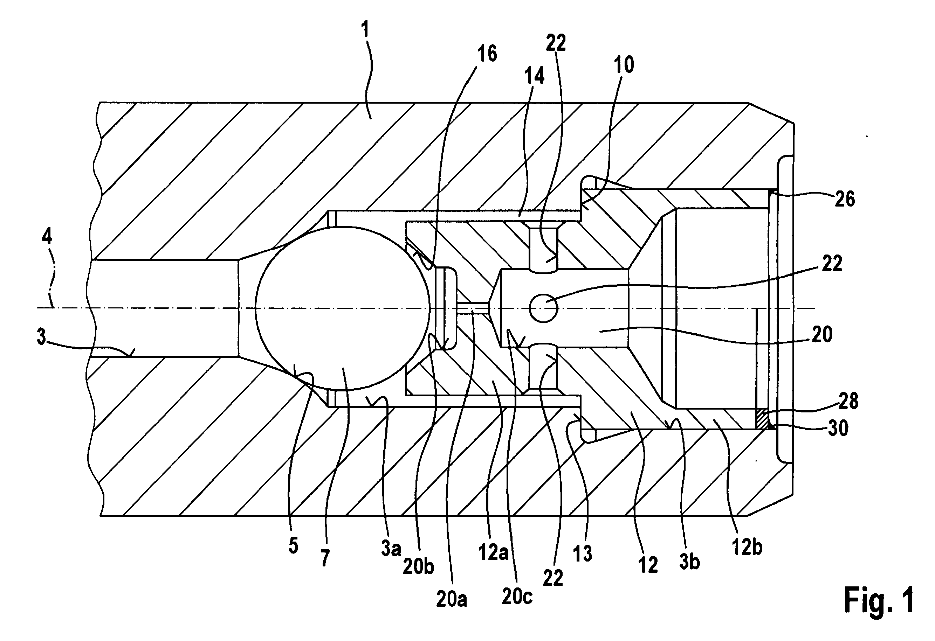

In Figur 1 ist ein Bauteil, welches beispielsweise ein Druckübersetzerkolben eines hydraulischen Druckübersetzers sein kann, mit dem Bezugszeichen 1 bezeichnet. In diesem Bauteil 1 ist ein nachfolgend näher erläutertes Rückschlagventil angeordnet wobei das Bauteil 1 ein Ventilgehäuse für das Rückschlagventil bildet. Im Ventilgehäuse 1 ist eine gestufte Bohrung 3 vorgesehen. Zwischen zwei Abschnitten der Bohrung 3 mit unterschiedlichen Durchmessern ist ein Ventilsitz 5 ausgebildet.

In der Bohrung 3 ist ein zumindest annähernd kugelförmiges Ventilglied 7 angeordnet. Das Ventilglied 7 wirkt mit dem Ventilsitz 5 im Ventilgehäuse 1 zusammen und verschließt das Rückschlagventil, sobald das Ventilglied 7 auf dem Ventilsitz 5 aufliegt. An den Ventilsitz 5 anschließend weist die Bohrung 3 einen Abschnitt 3a mit einem Durchmesser auf, der etwas größer ist als der Durchmesser des Ventilglieds 7. Zum Ende des Ventilgehäuses 1 hin ist die Bohrung 3 offen und weist einen Abschnitt 3b mit gegenüber dem Abschnitt 3a größerem Durchmesser auf. Durch die Durchmesseränderung vom Abschnitt 3a zum Abschnitt 3b ist in der Bohrung 3 eine dem Ventilsitz 5 abgewandte Ringschulter 10 gebildet.

Zur Begrenzung des Öffnungshubs des Ventilglieds 7 ist in die Bohrung 3 von deren offenem Ende des Ventilgehäuses 1 her ein Hubanschlagelement 12 eingesetzt. Das Hubanschlagelement 12 ist dabei im Durchmesser gestuft ausgebildet und weist einen im Abschnitt 3a der Bohrung 3 angeordneten Abschnitt 12a auf, dessen Durchmesser etwas kleiner ist als der Durchmesser des Abschnitts 3a der Bohrung 3, so dass zwischen dem Abschnitt 12a des Hubanschlagelements 12 und dem Abschnitt 3a der Bohrung 3 ein Ringspalt 14 vorhanden ist. Das Hubanschlagelement 12 weist außerdem einen im Abschnitt 3b der Bohrung 3 angeordneten Abschnitt 12b mit gegenüber dem Abschnitt 12a größerem Durchmesser auf. Der Durchmesser des Abschnitts 12b des Hubanschlagelements 12 ist nur wenig kleiner als der Durchmesser des Abschnitts 3b der Bohrung 3. Durch die Durchmesseränderung des Hubanschlagelements 12 ist an diesem eine dem Ventilsitz 5 zugewandte Ringschulter 13 gebildet.

Auf der dem Ventilglied 7 zugewandten Seite des Hubanschlagelements 12 ist eine trichterförmige Vertiefung 16 eingebracht, die beispielsweise etwa kegelstumpfförmig oder kalottenförmig ausgebildet ist. Der Durchmesser der Vertiefung 16 ist kleiner als der Durchmesser des Ventilglieds 7, so dass das Ventilglied 7 teilweise in die Vertiefung 16 eintauchen kann. Die Vertiefung 16 ist zumindest annähernd koaxial zur Längsachse 4 der Bohrung 3 angeordnet und das Ventilglied 7 ist zumindest koaxial in der Bohrung 3 angeordnet und in Richtung der Längsachse 4 beweglich.

Im Hubanschlagelement 12 ist eine im Durchmesser mehrfach gestufte durchgehende Längsbohrung 20 eingebracht, die einerseits in die Vertiefung 16 und andererseits am offenen Ende der Bohrung 3 am Hubanschlagelement 12 mündet. Die Längsbohrung 20 weist in ihrem zur Vertiefung 16 hin verlaufenden Bereich 20a einen kleinen Durchmesser auf und bildet somit eine Drosselbohrung 20a. Die Mündung 20b der Längsbohrung 20 in die Vertiefung 16 weist einen wesentlich größeren Durchmesser auf als die Drosselbohrung 20a. Der Übergang von der Mündung 20b in die Drosselbohrung 20a ist abrupt und scharfkantig ausgebildet, so dass die Strömung ausgehend von der Vertiefung 16 in die Drosselbohrung 20a stark behindert wird. An die Drosselbohrung 20a schließt sich auf deren der Vertiefung 16 abgewandten Seite ein weiterer Bereich 20c der Längsbohrung 20 an, der einen größeren Durchmesser als die Drosselbohrung 20a aufweist. Der Übergang vom Bereich 20c der Längsbohrung 20 in die Drosselbohrung 20a ist strömungsgünstig ausgebildet, wobei beispielsweise ein wie in Figur 1 dargestellter etwa konischer oder ein gerundeter Übergang vorgesehen ist. Im Abschnitt 12a des Hubanschlagelements 12 ist wenigstens eine Querbohrung 22 eingebracht, durch die der Bereich 20c der Längsbohrung 20 mit dem Ringspalt 14 verbunden ist. Vorzugsweise sind mehrere über den Umfang verteilt angeordnete Querbohrungen 22 im Hubanschlagelement 12 vorgesehen.

Das Hubanschlagelement 12 ist vorzugsweise aus gehärtetem Stahl hergestellt, um einen geringen Verschleiß sicherzustellen, da beim Öffnen des Rückschlagventils das Ventilglied 7 auf das Hubanschlagelement 12 auftrifft. Das Ventilglied 7 ist ebenfalls vorzugsweise aus gehärtetem Stahl hergestellt, wobei als Ventilglied 7 beispielsweise übliche Kugeln für Kugellager verwendet werden können, die als Standardteile verfügbar sind. Durch die trichterförmige Vertiefung 16 wird das Ventilglied 7 bei dessen Hubbewegung zentriert und dadurch erreicht, dass das Ventilglied 7 bei dessen Schließbewegung zumindest annähernd zentrisch auf den Ventilsitz 5 trifft, so dass auch der Verschleiß des Ventilsitzes 5 gering gehalten werden kann.

In geöffnetem Zustand des Rückschlagventils wird die Mündung 20b der Längsbohrung 20 in der Vertiefung 16 des Hubanschlagelements 12 durch das Ventilglied 7 verschlossen. Ein Abströmen von Flüssigkeit ist durch den Ringspalt 14, die wenigstens eine Querbohrung 22 und die Längsbohrung 20 im Hubanschlagelement 12 ermöglicht. Durch den scharfkantigen Übergang von der Mündung 20b der Längsbohrung 20 in der Vertiefung 16 in die Drosselbohrung 20a ist die Verdrängung von Flüssigkeit aus der Vertiefung 16 in die Längsbohrung 20 erschwert, hier ist ein erhöhter Strömungswiderstand vorhanden. Beim Öffnen des Rückschlagventils tritt das Ventilglied 7 in die Vertiefung 16 ein und verdrängt aus dieser Flüssigkeit in die Längsbohrung 20. Durch den erhöhten Strömungswiderstand wird die Bewegung des Ventilglieds 7 gedämpft, so dass dessen Aufprall am Hubanschlagelement 12 weniger heftig ist. Beim Schließen des Rückschlagventils ist ein schnelles Abheben des Ventilglieds 7 vom Hubanschlagelement 12 sichergestellt, da die Einströmung von Flüssigkeit aus der Längsbohrung 20 in die Vertiefung 16 durch den strömungsgünstig ausgebildeten Übergang vom Bereich 20c in die Drosselbohrung 20a ermöglicht ist.

Beim Einbau des Rückschlagventils in das Ventilgehäuse 1 wird zunächst das Ventilglied 7 in die Bohrung 3 eingeführt. Anschließend wird das Hubanschlagelement 12 von der offenen Seite des Ventilgehäuses 1 her in die Bohrung 3 in Richtung der Längsachse 4 eingeführt, bis die Ringschulter 13 des Hubanschlagelements 12 an der Ringschulter 10 des Ventilgehäuses 1 zur Anlage kommt. Durch die axiale Lage des Hubanschlagelements 12 wird der maximale Hub des Ventilglieds 7 festgelegt, den dieses zwischen seiner Anlage am Ventilsitz 5 und am Hubanschlagelement 12 ausführen kann.

Das Hubanschlagelement 12 ist in der Bohrung 3 des Ventilgehäuses 1 mittels einer Schweißverbindung zumindest mittelbar in axialer Richtung fixiert. Vorzugsweise ist das Hubanschlagelement 12 selbst an seinem Umfang durch eine Schweißverbindung 26 in der Bohrung 3 mit dem Ventilgehäuse 1 stoffschlüssig verbunden, wie in Figur 1 in der oberen Hälfte dargestellt. Die Schweißverbindung 26 ist dabei nahe dem offenen Ende des Ventilgehäuses 1 angeordnet. Alternativ kann auch vorgesehen sein, dass nach dem Einsetzen des Hubanschlagelements 12 in die Bohrung 3 wie in Figur 1 in der unteren Hälfte dargestellt ein Schweißring 28 eingesetzt wird, durch den das Hubanschlagelement 12 in axialer Richtung fixiert wird und der mittels einer Schweißverbindung 30 mit dem Ventilgehäuse 1 stoffschlüssig verbunden wird.

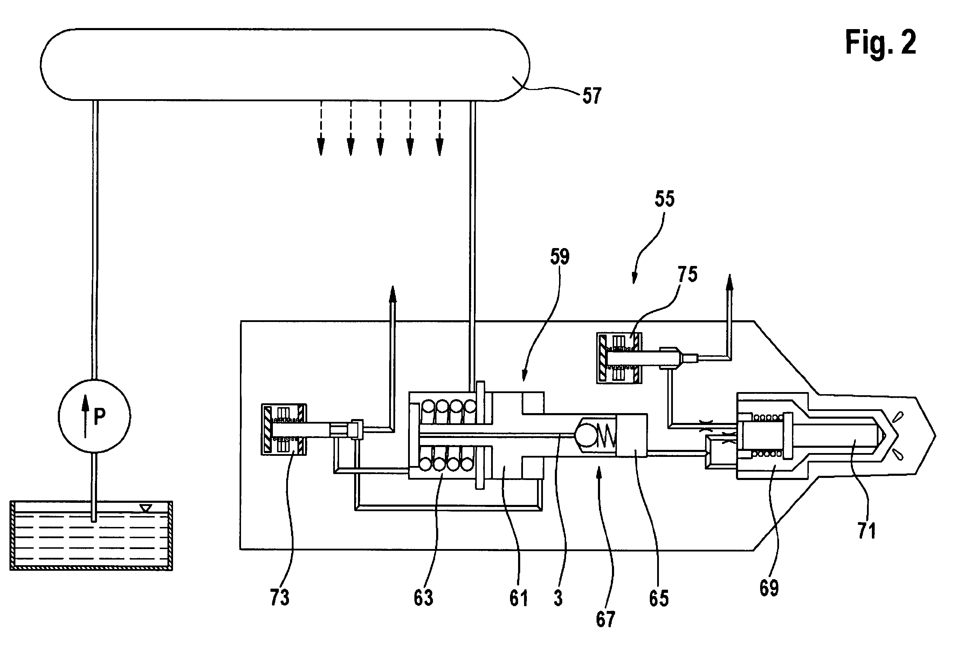

In Figur 2 ist ein Anwendungsbeispiel für das erfindungsgemäße Rückschlagventil schematisch dargestellt. Ein Injektor ist in seiner Gesamtheit mit dem Bezugszeichen 55 bezeichnet. Der Injektor 55 wird über eine Hochdruckleitung (ohne Bezugszeichen) von einem Common Rail 57 mit unter hohem Druck stehenden Kraftstoff versorgt. In dem Injektor 55 ist ein hydraulischer Druckübersetzer 59 vorgesehen. Der hydraulische Druckübersetzer 59 umfasst einen Übersetzerkolben 61, der einen Niederdruckraum 63 von einem Hochdruckraum 65 trennt. In dem Druckübersetzerkolben 61 ist eine Längsbohrung 3 vorhanden. In der Bohrung 3 ist ein stilisiert dargestelltes Rückschlagventil 67 angeordnet, welches verhindert, dass Kraftstoff aus dem Hochdruckraum 65 in den Niederdruckraum 63 strömen kann. Dieses Rückschlagventil 67 ist ein Rückschlagventil gemäß dem vorstehend erläuterten Ausführungsbeispiel gemäß Figur 1.

Der Hochdruckraum 65 ist mit einem Druckraum 69 in dem eine Düsennadel 71 angeordnet ist, hydraulisch verbunden. Über ein erstes Magnetventil 73, welches als 3/2-Wegeventil ausgebildet ist und den hydraulischen Druckübersetzer 59 steuert, und ein zweites Magnetventil 75, welches den Druck im Druckraum 69 steuert, wird die Düsennadel 71 geöffnet und geschlossen.

Der Übersetzerkolben 61 ist vorzugsweise aus einem Wälzlagerstahl mit einem Kohlenstoffgehalt von etwa 1% hergestellt. Der Übersetzerkolben 61 ist mit einem sehr geringen Spiel geführt und weist auf seiner Außenfläche eine Verschleißschutzschicht auf. Der Wärmeeintrag in den Übersetzerkolben 61 bei der Herstellung der Schweißverbindung 26,30 zur Fixierung des Hubanschlagelements 12 in der Bohrung 3 des Übersetzerkolbens 61 muss somit möglichst gering gehalten werden, um das Führungsspiel des Übersetzerkolbens 61 nicht zu beeinflussen und die Verschleißschutzschicht des Übersetzerkolbens 61 nicht zu beschädigen, durch thermische Einflüsse beim Schweißen und/oder Wärmeverzug und dadurch späteres zu geringes Führungsspiel des Übersetzerkolbens 61 und somit erhöhten Verschleiß.

## Patentansprüche

1. Rückschlagvenfil mit einem Ventilgehäuse (1;61), in dem eine Bohrung (3) eingebracht ist, wobei in der Bohrung (3) ein Ventilsitz (5) ausgebildet ist, mit einem kugelförmigen Ventilglied (7) und mit einem Hubanschlagelement (12) für das Ventilglied (7), an dem dieses bei geöffnetem Rückschlagventil zur Anlage kommt, wobei das Hubanschlagelement (12) auf seiner dem Ventilglied (7) zugewandten Seite eine trichterförmige Vertiefung (16) aufweist, in die das Ventilglied (7) in geöffnetem Zustand des Rückschlagventils eintaucht und das Hubanschlagelement (12) in der Bohrung (3b) mittels einer Schweißverbindung (26;30) zumindest mittelbar axial fixiert ist, und das Hubanschlagelement (12) eine durchgehende Längsbohrung (20) aufweist, wobei die Längsbohrung (20) zur Vertiefung (16) hin einen als Drosselbohrung (20a) ausgebildeten Bereich aufweist und die Mündung (20b) der Längsbohrung (20) in die Vertiefung (16) einen größeren Durchmesser aufweist als die Drosselbohrung (20a).

2. Rückschlagventil nach Anspruch 1, **dadurch gekennzeichnet, dass** das Hubanschlagelement (12) und das Vefltilgehäuse (1;61) aus gehärtetem Stahl hergestellt sind.

3. Rückschlagventil nach Anspruch 1 oder 2, **dadurch gekennzeichnet, dass** das Hubanschlagelement (12) an seinem Umfang in der Bohrung (3) mit dem Ventilgehäuse (1;61) verschweißt ist.

4. Rückschlagventil nach einem der Ansprüche 1 bis 3, **dadurch gekennzeichnet, dass** in der Bohrung (3) durch eine Durchmesseränderung der Bohrung (3) eine dem Ventilsitz (5) abgewandte Ringschulter (10) gebildet ist, die einen Anschlag für das Hubanschlagelement (12) bildet, an dem das Hubanschlagelement (12) in axialer Richtung bei dessen Einsetzen in die Bohrung (3) zum Ventilsitz (5) hin zur Anlage kommt.

5. Rückschlagventil nach Anspruch 1, **dadurch gekennzeichnet, dass** der Übergang zwischen der Drosselbohrung (20a) und der Mündung (20b) der Längsbohrung (20) scharfkantig ausgebildet ist.

6. Rückschlagventil nach Anspruch 1 oder 5, **dadurch gekennzeichnet, dass** die Längsbohrung (20) an die Drosselbohrung (20a) auf deren der Vertie. fung (16) abgewandten Seite anschließend einen weiteren Bereich (20c) mit größerem Durchmesser als die Drosselbohrung (20a) aufweist und dass der Übergang zwischen. der Drosselbohrung (20a) und dem weiteren Bereich (20c) der Längsbohrung (20) strömungsgünstig ausgebildet ist, vorzugsweise zumindest annähernd konisch oder gerundet

7. Rückschlagventil nach einem der Ansprüche 1, 5 oder 6, **dadurch gekennzeichnet, dass** im Bereich der Bohrung (3) zwischen der Ringschulter (10) und dem Ventilsitz (5) zwischen dem Hubanschlagelement (12) und der Bohrung (3) ein Ringspalt (14) vorhanden ist und dass Im Hubanschlagelement (12) wenigstens eine den Ringspalt (14) mit der Längsbohrung (20) verbindende Querbohrung (22) eingebracht ist.

8. Injektor für ein Kraftstoffeinspritzsystem einer Brennkraftmaschine, mit einem hydraulischen Druckübersetzer (59), **dadurch gekennzeichnet, dass** in dem hydraulischen Druckübersetzer (59), insbesondere in einem Übersetzerkolben (61) des hydraulischen Druckübersetzers (59), ein Rückschlagventil (67) gemäß einem der vorstehenden Ansprüche vorhanden ist.

## Claims

1. Non-return valve having a valve housing (1; 61) in which is formed a bore (3), wherein a valve seat (5) is formed in the bore (3), having a spherical valve member (7) and having a stroke stop element (12) for the valve member (7), with which stroke stop element said valve member comes into contact when the non-return valve is open, wherein the stroke stop element (12) has, on its side facing towards the valve member (7), a funnel-shaped depression (16) into which the valve member (7) protrudes when the non-return valve is in the open state, and the stroke stop element (12) is at least indirectly axially fixed in the bore (3b) by means of a welded connection (26; 30), and the stroke stop element (12) has a continuous longitudinal bore (20), wherein the longitudinal bore (20) has, towards the depression (16), a region formed as a throttle bore (20a), and the opening (20b) of the longitudinal bore (20) into the depression (16) has a greater diameter than the throttle bore (20a).

2. Non-return valve according to Claim 1, **characterized in that** the stroke stop element (12) and the valve housing (1; 61) are produced from hardened steel.

3. Non-return valve according to Claim 1 or 2, **characterized in that** the stroke stop element (12) is welded at its circumference, in the bore (3), to the valve housing (1; 61).

4. Non-return valve according to one of Claims 1 to 3, **characterized in that** an annular shoulder (10) which faces away from the valve seat (5) is formed in the bore (3) as a result of a change in diameter of the bore (3), said annular shoulder forming a stop for the stroke stop element (12), with which stop the stroke stop element (12) comes into contact in the axial direction towards the valve seat (5) when said stroke stop element is inserted into the bore (3).

5. Non-return valve according to Claim 1, **characterized in that** the transition between the throttle bore (20a) and the opening (20b) of the longitudinal bore (20) is of sharp-edged design.

6. Non-return valve according to Claim 1 or 5, **characterized in that** the longitudinal bore (20) has, adjoining the throttle bore (20a) on that side thereof which faces away from the depression (16), a further region (20c) of greater diameter than the throttle bore (20a), and **in that** the transition between the throttle bore (20a) and the further region (20c) of the longitudinal bore (20) is of streamlined design, preferably at least approximately conical or rounded.

7. Non-return valve according to one of Claims 1, 5 or 6, **characterized in that**, in the region of the bore (3) between the annular shoulder (10) and the valve seat (5), an annular gap (14) is provided between the stroke stop element (12) and the bore (3), and **in that** at least one transverse bore (22) which connects the annular gap (14) to the longitudinal bore (20) is formed in the stroke stop element (12).

8. Injector for a fuel injection system of an internal combustion engine, having a hydraulic pressure booster (59), **characterized in that** a non-return valve (67) according to one of the preceding claims is provided in the hydraulic pressure booster (59), in particular in a booster piston (61) of the hydraulic pressure booster (59).

## Revendications

1. Clapet anti-retour comprenant un boîtier de clapet (1 ; 61), dans lequel est pratiqué un alésage (3), un siège de clapet (5) étant réalisé dans l'alésage (3), avec un organe de clapet de forme sphérique (7) et un élément de butée de fin de course (12) pour l'organe de clapet (7), contre lequel celui-ci vient buter lorsque le clapet anti-retour est ouvert, l'élément de butée de fin de course (12) présentant sur son côté tourné vers l'organe de clapet (7) un renfoncement en forme d'entonnoir (16), dans lequel l'organe de clapet (7) plonge dans l'état ouvert du clapet anti-retour, et l'élément de butée de fin de course (12) étant fixé axialement au moins indirectement dans l'alésage (3b) au moyen d'une connexion soudée (26 ; 30), et l'élément de butée de fin de course (12) présentant un alésage longitudinal traversant (20), l'alésage longitudinal (20) présentant vers le renfoncement (16) une région réalisée sous forme d'alésage d'étranglement (20a), et l'embouchure (20b) de l'alésage longitudinal (20) dans le renfoncement (16) présentant un plus grand diamètre que l'alésage d'étranglement (20a).

2. Clapet anti-retour selon la revendication 1, **caractérisé en ce que** l'élément de butée de fin de course (12) et le boîtier de clapet (1 ; 61) sont fabriqués en acier trempé.

3. Clapet anti-retour selon la revendication 1 ou 2, **caractérisé en ce que** l'élément de butée de fin de course (12) est soudé au niveau de sa périphérie dans l'alésage (3) avec le boîtier de clapet (1 ; 61).

4. Clapet anti-retour selon l'une quelconque des revendications 1 à 3, **caractérisé en ce que** dans l'alésage (3) est formé un épaulement annulaire (10) opposé au siège de clapet (5) par une variation du diamètre de l'alésage (3), lequel épaulement annulaire forme une butée pour l'élément de butée de fin de course (12), contre laquelle l'élément de butée de fin de course (12) vient en appui dans la direction axiale lors de son insertion dans l'alésage (3) vers le siège de clapet (5).

5. Clapet anti-retour selon la revendication 1, **caractérisé en ce que** la transition entre l'alésage d'étranglement (20a) et l'embouchure (20b) de l'alésage longitudinal (20) est réalisée avec des arêtes vives.

6. Clapet anti-retour selon la revendication 1 ou 5, **caractérisé en ce que** l'alésage longitudinal (20) présente au niveau de l'alésage d'étranglement (20a) sur son côté opposé au renfoncement (16) une autre région suivante (20c) de plus grand diamètre que l'alésage d'étranglement (20a), et **en ce que** la transition entre l'alésage d'étranglement (20a) et l'autre région (20c) de l'alésage longitudinal (20) est réalisée de manière favorable à l'écoulement, de préférence au moins sous forme approximativement conique ou arrondie.

7. Clapet anti-retour selon l'une quelconque des revendications 1, 5 ou 6, **caractérisé en ce que** dans la région de l'alésage (3) entre l'épaulement annulaire (10) et le siège de clapet (5) entre l'élément de butée de fin de course (12) et l'alésage (3) est prévue une fente annulaire (14) et **en ce qu'**au moins un alésage transversal (22) reliant la fente annulaire (14) à l'alésage longitudinal (20) est pratiqué dans l'élément de butée de fin de course (12).

8. Injecteur pour un système d'injection de carburant d'un moteur à combustion interne, comprenant un multiplicateur de pression hydraulique (59), **caractérisé en ce que** dans le multiplicateur de pression hydraulique (59), notamment dans un piston multiplicateur (61) du multiplicateur de pression hydraulique (59), est prévu un clapet anti-retour (67) selon l'une quelconque des revendications précédentes.
